# FASCICULE DE BREVET EUROPEEN

(11) **EP 4 085 187 B1**
(45) Date de publication et mention de la délivrance du brevet: **06.03.2024**
(21) Numéro de dépôt: 20851231.9
(22) Date de dépôt: 23.12.2020
(51) Int. Cl.: F02C 9/00, F02K 1/76

(54) **SYSTÈME DE PILOTAGE D'UN MOYEN D'INVERSION DE POUSSÉE D'UN AÉRONEF**
SYSTEM ZUR STEUERUNG VON SCHUBUMKEHRMITTELN EINES FLUGZEUGES
SYSTEM FOR CONTROLLING AN AIRCRAFT THRUST REVERSAL MEANS

(30) Priorité: 30.12.2019 FR 1915732
(43) Date de publication de la demande: 09.11.2022
(73) Titulaire: Safran Nacelles, 76700 Gonfreville-l'Orcher (FR); Safran Landing Systems, 78140 Vélizy-Villacoublay (FR); Safran Electronics & Defense, 75015 Paris (FR); SAFRAN AIRCRAFT ENGINES, 75015 Paris (FR)
(72) Inventeur: MIRALLES, Laurent, 77550 MOISSY-CRAMAYEL (FR); MAALIOUNE, Hakim, 77550 MOISSY-CRAMAYEL (FR); BASTIDE, Christophe, 77550 MOISSY-CRAMAYEL (FR); FERT, Jérémy Edmond, 77550 MOISSY-CRAMAYEL (FR); HUPIN, Vincent, 77550 MOISSY-CRAMAYEL (FR)
(74) Mandataire: Casalonga
(86) Numéro de dépôt international: PCT/FR2020/052622
(87) Numéro de publication internationale: WO 2021/136911

(56) Documents cités:
- FR-A1- 2 930 973
- FR-A1- 3 045 563
- US-A1- 2019 127 076

## Description

La présente invention concerne un système et un procédé de pilotage d'un moyen d'inversion de poussée d'un aéronef.

Au cours d'un atterrissage, un aéronef, par exemple un avion, se pose sur une surface, par exemple une piste d'atterrissage, à une vitesse importante. Ensuite, des systèmes de freinage agissent pour diminuer la vitesse de l'aéronef jusqu'à l'immobiliser complètement ou lui permettre de rouler en sécurité jusqu'à un point de stationnement.

Les systèmes de freinage mis en oeuvre pour diminuer la vitesse de l'aéronef au cours d'un atterrissage comprennent des freins à friction agissant sur le train d'atterrissage, des aérofreins d'atterrissage également connus sous la dénomination anglo-saxonne « ground spoilers », et des inverseurs de poussée. Selon une procédure d'atterrissage classique, une fois que le pilote a posé l'aéronef sur la piste, il actionne immédiatement les freins à friction et les aérofreins d'atterrissage. S'il l'estime nécessaire, le pilote peut actionner manuellement les inverseurs de poussée. L'actionnement des inverseurs de poussée peut également avoir lieu lors d'une interruption de décollage de l'aéronef.

Si les systèmes de freinage ne sont pas utilisés de manière optimale, l'aéronef risque d'effectuer une sortie de piste longitudinale. Il peut en résulter des conséquences dramatiques pour les passagers de l'aéronef ou pour des personnes situées à proximité de la piste. Ce risque est d'autant plus important que la longueur de la piste est faible, que l'aéronef est lourd ou que les conditions météorologiques sont défavorables.

Pour limiter ce risque, il a été proposé un système d'autofreinage, également connu sous la dénomination anglo-saxonne « auto brake » ou sous l'acronyme correspondant « AB ». Un tel système actionne automatiquement les freins à friction dès que l'aéronef est posé sur la piste. Une telle solution permet donc de diminuer le temps de réaction avant l'actionnement des freins à friction, et donc de diminuer la distance de freinage.

Toutefois, une telle solution peut ne pas apporter satisfaction dans certaines conditions. Par exemple, lorsque la piste d'atterrissage est mouillée, le frein à friction ne fonctionne pas à sa pleine efficacité. Il peut également arriver que, en raison d'une durée excessive entre le début de l'arrondi et le toucher de l'aéronef sur la piste, les seuls freins à friction ne soient pas suffisants pour arrêter l'aéronef à temps. Dans le cas d'une interruption de décollage, la longueur de piste restante peut être critique pour permettre à l'aéronef de s'arrêter sans faire une sortie de piste. Dans ces exemples, l'aéronef risque une sortie de piste longitudinale à moins d'utiliser l'inversion de poussée.

Pour ce faire, le pilote doit prendre la décision d'utiliser l'inversion de poussée et actionner manuellement l'ouverture des inverseurs de poussée. Ces actions doivent être mises en oeuvre dans une situation de stress pour le pilote, en raison des mauvaises conditions météorologiques, du toucher tardif de l'aéronef sur la piste, ou d'une interruption de décollage. En raison de ce stress, le pilote peut mettre un certain temps à prendre la décision d'utiliser l'inversion de poussée ou même oublier d'actionner l'ouverture des inverseurs de poussée.

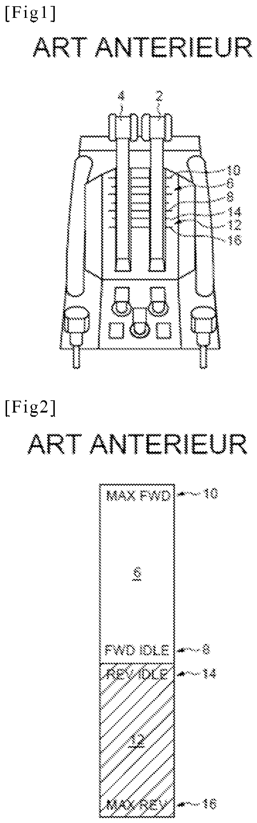

Pour pallier cet inconvénient, certains aéronefs sont équipés d'une commande de ralenti inverseur, également connu sous la dénomination anglo-saxonne « Reverse Idle » ou sous l'abréviation correspondante « REV IDLE ». En référence aux figures 1 et 2, une manette de pilotage 2 ou 4 de la poussée d'un tel aéronef peut être positionnée dans un domaine 6 de fonctionnement en marche vers l'avant, situé entre une position 8 de ralenti en marche avant, également connue sous la dénomination anglo-saxonne « Forward Idle » ou sous l'abréviation correspondante « FWD IDLE », et une position 10 de pleins gaz en marche avant, également connue sous la dénomination anglo-saxonne « Forward Maximum » ou sous l'abréviation correspondante « FWD MAX ». La manette de pilotage 2 ou 4 peut également être positionnée dans un domaine d'inversion de poussée 12 généralement repérée par des rainures. Le domaine 12 s'étend entre une position de ralenti inverseur 14, également connue sous la dénomination anglo-saxonne « Reverse Idle » ou sous l'abréviation correspondante « REV IDLE », et une position de puissance maximale avec inverseur 16, également connue sous la dénomination anglo-saxonne « Reverse Maximum » ou sous l'abréviation correspondante « REV MAX ».

Dans un aéronef muni d'une telle commande de ralenti inverseur, le pilote place la manette de pilotage 2 ou 4 dans la position 14 à un instant précédant le toucher de l'aéronef sur la piste. Par exemple, le pilote peut placer la manette de pilotage 2 ou 4 dans la position 14 au début de l'arrondi en phase finale d'atterrissage, au même moment que le moment où il réduit complètement les gaz. En réponse, l'inverseur de poussée reste fermé tant qu'il n'est pas détecté que la masse de l'aéronef repose sur les trains d'atterrissage. Dès que la masse de l'aéronef repose sur le train d'atterrissage, l'inverseur de poussée est ouvert et l'inversion de poussée peut être mise en oeuvre avec un temps de réponse réduit.

Si une telle solution a pu diminuer le risque de sortie de piste longitudinale dans le cas de l'atterrissage, elle n'apporte pas pleine satisfaction. En effet, cette solution nécessite que le pilote entreprenne de positionner la manette 2 ou 4 dans la position 14 au cours d'une phase finale de l'atterrissage de l'aéronef. A cet instant, le pilote est déjà soumis à un stress important. Ce stress est d'autant plus important lorsque les conditions météorologiques sont mauvaises, ce qui correspond aux conditions dans lesquelles les inverseurs de poussée risquent de devoir jouer un rôle important. De ce fait, le risque est toujours présent que le pilote actionne trop tardivement, ou oublie d'actionner les inverseurs de poussée.

Des systèmes de pilotage d'inverseurs de poussée selon l'art antérieur sont divulgués dans les documents FR2930973A1 et US2019/127076A1.

Au vu de ce qui précède, l'invention vise à remédier aux inconvénients précités.

Plus particulièrement, l'invention vise à améliorer le pilotage de l'inversion de poussée afin de diminuer autant que possible le temps écoulé avant la mise en oeuvre de l'inversion de poussée ou de limiter le risque d'un oubli de l'actionnement des inverseurs de poussée.

A cet effet, il est proposé un système de pilotage d'un moyen d'inversion de poussée d'un aéronef, comprenant un moyen de commande de ralenti inverseur, un premier moyen de détection configuré pour détecter, lorsque la commande de ralenti inverseur est active, une condition d'activation du moyen d'inversion de poussée, et un moyen d'actionnement configuré pour activer le moyen d'inversion de poussée lorsque le premier moyen de détection détecte une condition d'activation du moyen d'inversion de poussée.

Selon l'une de ses caractéristiques générales, ce système comprend en outre un second moyen de détection configuré pour détecter une condition d'activation de la commande de ralenti inverseur, le moyen de commande étant configuré pour activer la commande de ralenti inverseur lorsque le second moyen de détection détecte une condition d'activation de la commande de ralenti inverseur.

On évite ainsi à un utilisateur, par exemple un pilote de l'aéronef, de devoir piloter le moyen de commande lors d'une phase stressante telle qu'une phase finale d'atterrissage ou une phase de déclenchement d'une interruption de décollage. Il en résulte un temps de réaction plus rapide avant la mise en oeuvre de l'inversion de poussée et une diminution du risque que la commande d'actionnant de l'inversion de poussée soit oubliée.

On peut en outre prévoir un module d'armement apte à être activé par un utilisateur au cours d'une étape de préparation de l'atterrissage de l'aéronef et/ou d'une étape de préparation du décollage de l'aéronef, le second moyen de détection étant configuré pour détecter une condition d'activation de la commande de ralenti inverseur seulement si le module d'armement est activé.

On évite ainsi qu'un déclenchement de l'inversion de poussée arrive de manière non désirée, notamment lors d'une phase de vol en croisière.

Avantageusement, le module d'armement comprend un moyen d'armement d'un système d'autofreinage de l'aéronef, le module d'armement étant configuré pour être activé lorsqu'un utilisateur actionne le moyen d'armement.

Un tel module d'armement simplifie la manipulation du système de pilotage en permettant à un utilisateur, par exemple un pilote de l'aéronef, d'armer le système de pilotage du moyen d'inversion de poussée en même temps qu'il arme le système d'autofreinage de l'aéronef.

Dans un mode de réalisation, le moyen de commande comprend un contrôleur et une manette de pilotage d'au moins un moteur de l'aéronef, la manette de pilotage étant capable d'activer une commande de ralenti inverseur.

On peut en outre prévoir un actionneur motorisé en communication d'informations avec le contrôleur, le contrôleur étant apte à piloter l'actionneur motorisé de sorte à modifier une position de la manette de pilotage entre une position dans laquelle la manette de pilotage commande un fonctionnement en marche vers l'avant du moteur de l'aéronef et une position dans laquelle la manette de pilotage active une commande de ralenti inverseur.

Une telle conception permet d'automatiser aisément la commande d'inversion de poussée tout en assurant un bon contrôle visuel de l'activation de cette commande par un utilisateur, par exemple un pilote de l'aéronef.

On peut également prévoir un moyen d'affichage de la position de la manette de pilotage.

Selon un autre mode de réalisation, le système comprend un moyen d'affichage de l'activation de la commande de ralenti inverseur, le contrôleur étant apte à activer directement la commande de ralenti inverseur.

Une telle conception permet d'automatiser la commande d'inversion de poussée sans nécessiter de piloter un actionneur pour modifier la position d'une manette de commande du(des) moteur(s) de l'aéronef, ou de disposer d'un tel actionneur.

Dans un mode de réalisation, le second moyen de détection est apte à détecter au moins un paramètre choisi parmi une vitesse de l'aéronef, une altitude de l'aéronef, un taux de variation de l'altitude de l'aéronef, un angle de descente de l'aéronef.

Le second moyen de détection ainsi configuré rend plus fiable la détection d'une condition d'activation d'une commande de ralenti inverseur car il permet de détecter une situation correspondant à un début d'arrondi en phase finale d'atterrissage, qui est une situation adaptée pour commander l'activation de la commande de ralenti inverseur.

Avantageusement, une condition nécessaire pour que le second moyen de détection détecte une condition d'activation de la commande de ralenti inverseur est qu'une commande de puissance moteur de l'aéronef soit comprise entre 0% et 5% de la puissance maximale.

On rend ainsi plus fiable la détection d'une condition d'activation d'une commande de ralenti inverseur car la plage de commande de puissance moteur précitée correspond typiquement à la plage de commande de puissance moteur mise en oeuvre lorsqu'un aéronef est dans une situation de début d'arrondi en phase finale d'atterrissage.

Selon un autre aspect, il est proposé un procédé de pilotage d'un moyen d'inversion de poussée lié à au moins un moteur d'un aéronef, comprenant, dans cet ordre :
- la détection d'une condition d'activation d'une commande de ralenti inverseur,
- l'activation de la commande de ralenti inverseur,
- la détection d'une condition d'activation du moyen d'inversion de poussée, et
- l'activation du moyen d'inversion de poussée.

De préférence, la détection d'une condition d'activation d'une commande de ralenti inverseur étant de préférence la détection d'une situation de début d'arrondi avant atterrissage de l'aéronef ou la détection d'une situation de déclenchement d'une interruption de décollage.

D'autres buts, caractéristiques et avantages de l'invention apparaîtront la lecture de la description suivante, donnée uniquement à titre d'exemple non limitatif, et faite en référence aux dessins indexés sur lesquels :
[fig 1]
[fig 2] auxquelles il a déjà été fait référence, illustrent un exemple de manette de pilotage équipant des aéronefs,
[fig 3] illustre schématiquement un aéronef selon un aspect de la présente invention,
[fig 4] illustre schématiquement un système de pilotage selon un premier mode de réalisation pouvant être incorporé dans l'aéronef de la figure 3,
[fig 5] et
[fig 6] illustrent schématiquement un premier exemple de procédé de pilotage pouvant être mis en oeuvre au moyen du système de la figure 4,
[fig 7] et
[fig 8] illustrent schématiquement un second exemple de procédé de pilotage pouvant être mis en oeuvre au moyen du système de la figure 4, et
[fig 9] illustre schématiquement un système de pilotage selon un second mode de réalisation.

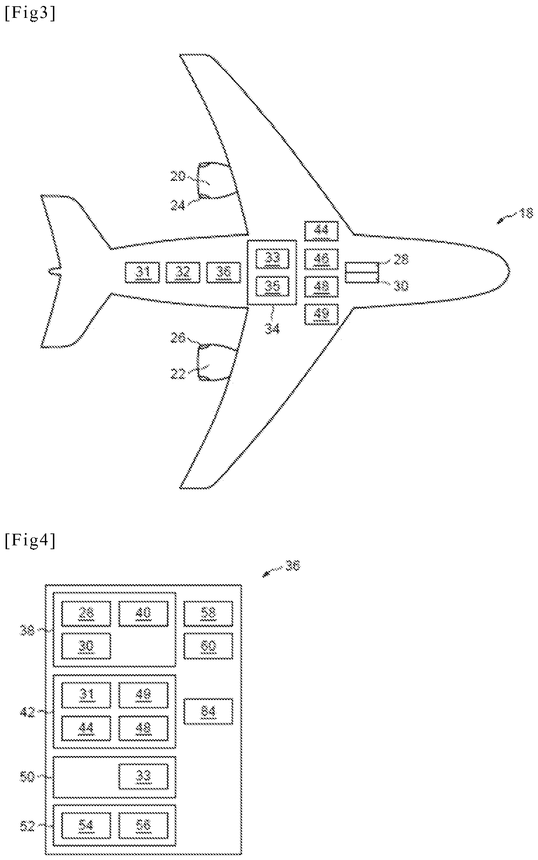

En référence à la figure 3, on a schématiquement représenté un aéronef 18 selon un aspect de la présente invention. En l'espèce, l'aéronef 18 est un avion doté de deux moteurs à réaction 20 et 22.

Chaque moteur 20, 22 est respectivement muni d'un inverseur de poussée 24, 26. Les inverseurs de poussée 24 et 26, connus en soi, comprennent des volets situés en aval du flux traversant les moteurs 20 et 22. Les volets des inverseurs de poussée 24 et 26 dévient le flux d'air issu des moteurs 20 et 22 de manière à exercer une poussée dirigée vers l'avant de l'aéronef 18. Un inverseur de poussée 24, 26 est fermé lorsque ses volets ne dévient pas le flux d'air issu du moteur respectif 20, 22, et ouvert lorsque ses volets dévient le flux d'air issu du moteur respectif 20, 22. Alternativement, les inverseurs de poussée 24 et 26 peuvent être des grilles capables de se découvrir.

L'aéronef 18 comporte deux manettes de pilotage 28 et 30. Les manettes de pilotage 28, 30 peuvent être manipulés par un pilote (non représenté) de l'aéronef 18 pour commander la poussée générée par les moteurs 20, 22 respectifs. Les manettes 28 et 30 peuvent être accompagnés de graduation semblable aux graduations accompagnant les manettes 2 et 4 représentées sur les figures 1 et 2. En particulier, les manettes 28 et 30 peuvent être positionnées dans le domaine de marche avant 6 entre la position de ralenti en marche avant 8 et la position de pleins gaz en marche avant 10, ou dans le domaine d'inversion de poussée 12 entre la position de ralenti inverseur 14 et la position de puissance maximale avec inverseur 16.

L'aéronef 18 comporte un détecteur de vitesse 44, pouvant par exemple être une sonde Pitot, un altimètre 46, un radioaltimètre 48, et un capteur 49 de la position des manettes 28 et 30.

L'aéronef 18 comporte un détecteur de masse sur les roues 31. Le détecteur de masse 31 peut être un détecteur de charge ou d'effort. Le détecteur 31 a pour fonction de détecter une situation dans laquelle la masse de l'aéronef 18 repose sur les roues d'un train d'atterrissage (non représenté) de l'aéronef 18. Cette condition est également connue sous la dénomination anglo-saxonne « Weight on Wheels » ou sous l'acronyme correspondant « WoW ».

L'aéronef 18 comporte un système de frein à disque 32. Le système 32 est capable de mettre en oeuvre un freinage par friction sur les roues du train d'atterrissage de l'aéronef 18.

L'aéronef 18 comporte un module d'autofreinage 34. Le module d'autofreinage 34 peut être manipulé par le pilote de manière à être armé et à sélectionner une intensité de freinage. A cet égard, le module 34 comporte un bouton d'armement 33 et une interface de saisie 35. Lorsque le module d'autofreinage 34 est armé, il est configuré pour piloter le système 32 à l'intensité de freinage saisie dès que le détecteur 31 détecte que la masse de l'aéronef 18 repose sur les roues du train d'atterrissage. On peut envisager, sans sortir du cadre de l'invention, une logique d'enclenchement automatique différente du système 32, par exemple une combinaison d'une condition de masse de l'aéronef 18 reposant sur les roues du train d'atterrissage, d'une condition d'aérofreins déployés et d'une condition d'un temps de confirmation.

L'aéronef 18 est doté d'un système de pilotage 36 des inverseurs de poussée 24 et 26. Le système 36 va maintenant être détaillé en référence à la figure 4.

Le système 36 comporte un moyen de commande 38 comprenant les manettes 28 et 30 et un contrôleur 40.

Le système 36 comporte un module de détection 42. Le module 42 comprend le détecteur 31, le détecteur de vitesse 44, le radioaltimètre 48 et le capteur de position 49. De ce fait, le module de détection 42 est capable de détecter une condition de masse de l'aéronef 18 reposant sur les roues du train d'atterrissage, une information de vitesse air de l'aéronef 18, une information d'altitude de l'aéronef 18 par rapport au sol et la position respective des manettes 28 et 30.

En calculant le taux de variation de l'altitude de l'aéronef 18 par rapport au temps, le module de détection 42 peut déterminer la vitesse de descente de l'aéronef 18. En déterminant le taux de variation de l'altitude de l'aéronef 18 par rapport au déplacement longitudinal de l'aéronef 18, le module 42 peut déterminer un angle de descente ou de montée de l'aéronef 18.

Le système 36 comporte un module d'armement 50. Le module d'armement 50 comporte le bouton d'armement 33 du système d'autofreinage 34.

Le système 36 comporte un module d'actionnement 52. Le module 52 comprend une unité d'actionnement 54 apte à piloter l'ouverture et la fermeture de l'inverseur de poussée 24, et une unité actionnement 56 apte à piloter l'ouverture et la fermeture de l'inverseur de poussée 26.

Le système 36 comporte un moteur électrique 58 capable de modifier la position de la manette 28 et un moteur électrique 60 capable de modifier la position de la manette 30. Les moteurs 58 et 60 permettent de déplacer les manettes 28 et 30 entre la position de ralenti inverseur 14 et la position de pleins gaz en marche avant 10.

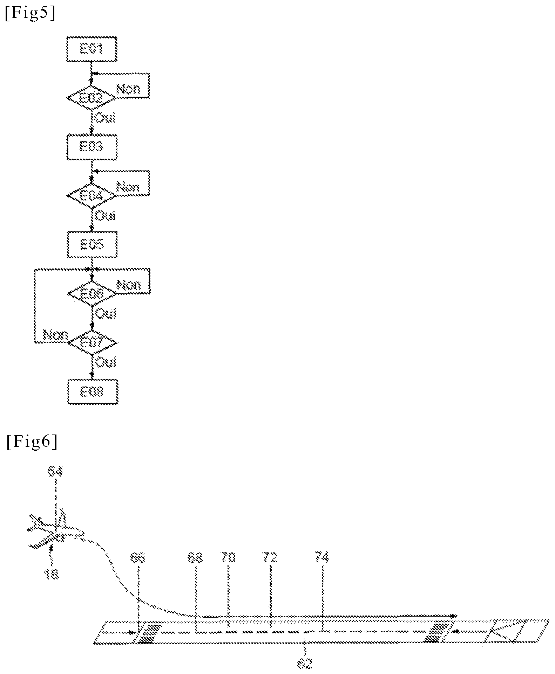

Le procédé de pilotage des inverseurs de poussée 24 et 26 représenté sur les figures 5 et 6 peut être mis en oeuvre au moyen du système de pilotage 36.

Le procédé représenté sur les figures 5 et 6 débute lors d'une phase d'approche en vue de l'atterrissage de l'aéronef 18 sur une piste 62. Par exemple, le procédé débute par une étape E01 de check-list d'approche. Au cours de l'étape E01, le pilote de l'aéronef 18 entreprend une pluralité d'actions destinées à préparer l'aéronef 18 à l'approche vers et à l'atterrissage sur la piste 62. Au cours de l'étape E01, le pilote peut notamment appuyer sur le bouton d'armement 33 du module d'autofreinage 34. La situation de l'aéronef 18 par rapport à la piste 62 au cours de l'étape E01 est schématiquement représentée sur la figure 6 par la référence 64.

Le procédé de la figure 5 comporte une seconde étape de test E02. Au cours de l'étape E02, on détermine si le pilote a appuyé sur le bouton d'armement 33. Si la réponse à l'étape E02 est « non », on considère que le pilote n'a pas armé le module d'armement 50 du système d'autofreinage 36, et les inverseurs de poussée 24 et 26 ne seront pas pilotés automatiquement par le système 36.

Si, à l'issue de l'étape E02, la réponse est « oui », on applique une étape E03 d'activation du module d'armement 50.

A la suite de l'étape E03, on applique une étape de test E04 de détection d'une condition d'activation de la commande de ralenti inverseur. Au cours de l'étape E04, le module de détection 42 recueille la vitesse détectée par le détecteur 44, l'altitude émise par le radioaltimètre 48, la position des manettes 28 et 30 ainsi que l'angle de descente de l'aéronef 18. A partir de ces données, le module de détection 42 détermine au cours de l'étape E04 si l'aéronef 18 débute l'arrondi avant le toucher sur la piste 62. Tant que les données recueillies par le module 42 n'indiquent pas que l'aéronef 18 a commencé l'arrondi en vue du toucher sur la piste 62, la réponse à l'étape de test E04 est « non ».

Dès que le module 42 détermine que l'aéronef 18 débute l'arrondi en vue du toucher sur la piste 62, la condition d'activation de la commande de ralenti inverseur est détectée et la réponse à l'étape de test E04 est « oui ». L'instant auquel la réponse à l'étape de test E04 devient « oui » est schématiquement représentée sur la figure 6 par la référence 66.

Par exemple, la condition d'activation de la commande de ralenti inverseur peut être détectée lorsque l'altitude par rapport au sol est inférieure à 50 pieds, la vitesse air est située dans une tolérance de 5 % autour de la vitesse de référence pour l'atterrissage, la position des manettes 28 et 30 est dans le domaine de marche avant 6 et comprise entre 0 % et 5 % de la puissance maximale pouvant être fournie par les moteurs 20 et 22, et la vitesse verticale est négative. Alternativement, la position des manettes 28 et 30 peut être comprise entre -5% et +5% autour de la position 8 de ralenti en marche avant.

Au cours de l'étape E05 suivante, le contrôleur 40 pilote les moteurs électriques 58 et 60 de manière à déplacer les manettes 28 et 30 dans la position de ralenti inverseur 14. En conséquence, la commande de ralenti inverseur est active sans que les inverseurs de poussée 24 et 26 soient ouverts car la masse de l'aéronef 18 ne repose pas encore sur les roues du train d'atterrissage.

Le procédé comporte une étape de test E06 au cours de laquelle on détermine si la masse de l'aéronef 18 repose sur les roues du train d'atterrissage. Tant que la masse de l'aéronef 18 ne repose pas sur les roues du train d'atterrissage, la réponse à l'étape E06 est « non ». Après que l'aéronef 18 a touché la piste 62, le module de détection 42 détecte que la masse de l'aéronef 18 repose sur les roues du train d'atterrissage et la réponse à l'étape E06 est « oui ». L'instant auquel la réponse à l'étape E06 devient « oui » est schématiquement représentée sur la figure 6 par la référence 68.

Lorsque la réponse à l'état E06 est « oui », on applique une étape de test E07 de détection d'une condition d'activation des inverseurs de poussée 24 et 26. Au cours de l'étape E07, on détecte si le toucher de l'aéronef 18 sur la piste 62 est confirmé. Pour ce faire, on détecte si la situation dans laquelle la masse de l'aéronef 18 repose sur les roues du train d'atterrissage reste vraie pendant une certaine durée, par exemple une demie seconde. Si, au cours de la demie seconde suivant l'instant 68, la masse de l'aéronef 18 ne repose plus sur les roues du train d'atterrissage, la réponse à l'étape E07 est « non » et on applique à nouveau l'étape E06. Si, pendant toute la demie seconde suivant l'instant 68, la masse de l'aéronef 18 est restée sur les roues du train atterrissage, la réponse à l'étape E07 est « oui » et une condition d'activation des inverseurs de poussée 24 et 26 est activée. L'instant auquel la réponse à l'étape E07 devient « oui » est référencé sur la figure 6 par la référence 70.

On applique alors une étape E08 de déploiement des inverseurs de poussée 24 et 26 en position ouverte. Au cours de l'étape E08, les unités 54 et 56 déplacent les volets des inverseurs de poussée 24 et 26 en position ouverte, les moteurs 20 et 22 fonctionnant toujours au ralenti. L'instant auquel les inverseurs de poussée 24 et 26 se trouvent déployés en position ouverte est référencé sur la figure 6 par la référence 72, et se situe environ 2 secondes après l'instant 70.

Le procédé de pilotage des inverseurs de poussée 24 et 26 est alors terminé. A l'issue de ce procédé, le pilote de l'aéronef 18 peut tirer à lui les manettes 28 et 30 pour augmenter la puissance fournie par les moteurs 20 et 22, et ainsi augmenter l'effet de freinage fourni par les inverseurs de poussée 24 et 26.

Le système 36 permet donc d'avoir les inverseurs de poussée 24 et 26 déployés en position ouverte 2,5 secondes après le toucher de l'aéronef 18 sur la piste 62. Par comparaison, lorsqu'un pilote déclenche manuellement l'inversion de poussée à la suite du toucher sur la piste, cette durée est en moyenne de 3,5 secondes. Étant donné que l'aéronef 18 circule à une vitesse très importante entre les instants 68 et 72, le système 36 diminue considérablement la distance de freinage de l'aéronef 18.

Cet avantage est encore plus important lorsque le pilote actionne manuellement de manière tardive le déploiement des inverseurs de poussée en raison d'un stress important, ce qui est susceptible d'arriver fréquemment compte tenu du fait que les inverseurs de poussée doivent être utilisés dans des situations stressantes pour le pilote, notamment dans des conditions météorologiques mauvaises ou suite à un arrondi trop long. Dans de tels exemples, le pilote peut mettre plusieurs secondes à positionner les manettes 28 et 30 dans la position de commande de ralenti inverseur 14. Dans ces conditions, la durée entre l'instant 68 et l'instant 72 est bien plus importante que 2,5 secondes. Le pilote peut même, sous l'effet du stress, oublier d'actionner l'inversion de poussée. La distance de freinage de l'aéronef 18 en est augmentée d'autant.

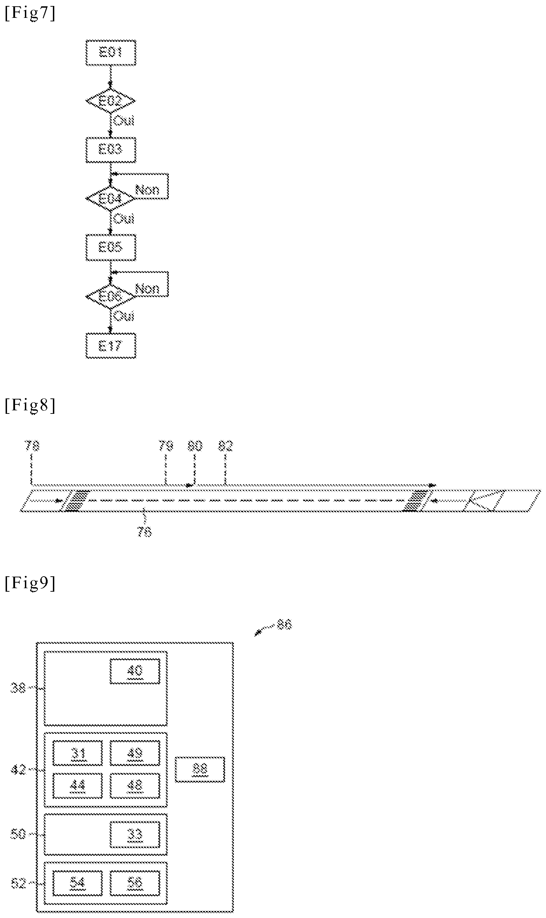

En référence aux figures 7 et 8, on a schématiquement représenté un autre exemple de mise en oeuvre d'un procédé de pilotage des inverseurs de poussée 24 et 26 destiné à être mis en oeuvre au moyen du système 36. Le procédé des figures 7 et 8 débute au cours d'une étape E01 de préparation au décollage de l'aéronef 18 sur une piste de décollage 76. Plus particulièrement, l'étape E01 peut comprendre la mise en oeuvre d'une check-list de décollage par le pilote de l'aéronef 18. Au cours de l'étape E01, le pilote prépare l'aéronef 18 en vue du décollage sur la piste 76. Au cours de l'étape 01, le pilote de l'aéronef 18 peut appuyer sur le bouton d'armement 33 du module d'autofreinage 34, afin que le système de frein à disque 32 se mette automatiquement en marche en cas de détection d'une interruption de décollage. L'instant correspondant à l'étape E01 est schématiquement représenté sur la figure 8 par la référence 78.

Le procédé de la figure 7 comprend une étape de test E02 au cours de laquelle on détermine si le pilote a appuyé sur le bouton d'armement 33. Si la réponse à l'étape E02 est « non », il est mis fin au procédé de la figure 7 et les inverseurs de poussée 24 et 26 ne seront pas pilotés automatiquement par le système 36.

Si la réponse à l'étape de test E02 est « oui », on applique une étape E03 d'activation du module d'armement 50.

A la suite de l'étape E03, on applique une étape de test E04 de détection d'une condition d'activation de la commande de ralenti inverseur. Au cours de l'étape E04, le module 42 détecte si une situation de déclenchement d'une interruption de décollage est mise en oeuvre. A cet effet, le module 42 peut recueillir au moins une donnée choisie parmi une consigne d'actionnement du système de frein à disque 32, un déplacement des manettes 28 et 30 depuis la position de pleins gaz en marche avant 10 vers la position de ralenti en marche avant 8, une vitesse air de l'aéronef 18 inférieure à la vitesse V1 calculée pré-décollage. Tant que, au cours de l'étape E04, il n'est pas détecté une situation de déclenchement d'une interruption de décollage, la réponse à l'étape E04 est « non ». Si, au cours de l'étape E04, il est détecté une situation de déclenchement d'une interruption de décollage, la réponse à l'étape E04 est « oui » et on applique une étape E05. L'instant auquel l'évènement déclencheur de l'interruption de décollage se produit est représenté sur la figure 8 par la référence 79. L'instant auquel la réponse à l'étape E04 devient « oui » est représenté sur la figure 8 par la référence 80.

Au cours de l'étape E05, le contrôleur 40 active la commande de ralenti inverseur.

Le procédé comprend ensuite une étape de test E06 de détection d'une condition d'activation du moyen d'inversion de poussée. Au cours de l'étape E06, on détecte si la masse de l'aéronef 18 repose sur les roues du train d'atterrissage. Comme l'aéronef 18 n'a pas décollé à l'instant 80, l'aéronef 18 est sur la piste 80 et la réponse à l'étape E06 est immédiatement « oui ».

On applique ensuite une étape E 17 au cours de laquelle le contrôleur 40 pilote les moteurs électriques 58 et 60 de manière à déplacer les manettes 28 et 30 jusqu'à la position 14. En résultat, les unités 54 et 56 déploient les inverseurs de poussée 24 et 26 en position ouverte.

A la fin de l'étape E17, les inverseurs de poussée 24 et 26 sont déployés en position ouverte. L'instant correspondant à la fin du déploiement des inverseurs de poussée en position ouverte est schématiquement représenté sur la figure 8 par la référence 82.

Le procédé est alors terminé et le pilote peut tirer à lui les manettes 28 et 30 pour augmenter l'effet de freinage par inversion de poussée.

Comme dans le procédé des figures 5 et 6, le système 36 permet de diminuer le temps écoulé entre l'instant 79 à l'origine de l'interruption du décollage et l'instant 82 auquel les inverseurs de poussée 24 et 26 sont déployés en position ouverte. Dans le cas d'une interruption de décollage, l'aéronef 18 est susceptible de circuler à une vitesse très élevée et le pilote est susceptible d'être soumis à un stress important. Ainsi, comme dans le cas des figures 5 et 6, le procédé des figures 7 et 8 permet de limiter considérablement la distance de freinage de l'aéronef 18, et donc de limiter d'autant le risque de sortie de piste longitudinale de l'aéronef 18.

Grâce aux moteurs électriques 58 et 60 modifiant la position des manettes 28 et 30, le pilote peut surveiller l'activation de la commande de ralenti inverseur. S'il le souhaite, il peut à tout moment déplacer les manettes 28 et 30 en dehors du domaine d'inversion de poussée 12 de manière à laisser ou rétablir les inverseurs de poussée 24 et 26 en position fermée.

En référence à la figure 4, le système 36 peut comprendre, en outre, un moyen d'affichage 84. En l'espèce, le moyen d'affichage 84 comprend un écran d'affichage (non représenté) capable d'afficher un message « commande de ralenti inverseur active ». Lorsqu'il est prévu, le moyen d'affichage 84 fournit ainsi un moyen supplémentaire pour informer le pilote de l'aéronef 18 de l'activation de la commande de ralenti inverseur.

En référence à la figure 9, on a représenté un système de pilotage 86 selon un deuxième mode de réalisation de l'invention. Le système 86 peut être incorporé dans l'aéronef 18 en lieu et place du système 36. Les éléments identiques portent les mêmes références.

Le système 86 diffère du système 36 en ce que le moyen de commande 38 est dépourvu des manettes 28 et 30. Le système 86 diffère encore du système 36 en ce qu'il est dépourvu des moteurs électriques 58 et 60. Par ailleurs, le contrôleur 40 est en communication directe d'informations avec les unités 54 et 56. Le système 86 comporte le moyen d'affichage 84.

Lorsque le système 86 est utilisé pour mettre en oeuvre le procédé des figures 5 et 6, au cours de l'étape E05, le contrôleur adresse un message au moyen d'affichage 84 pour afficher le message « commande de ralenti inverseur active ». Le contrôleur 40 peut, alternativement, émettre un message audio. Le contrôleur 40 peut également émettre une combinaison du message textuel et du message audio. A l'issue de l'étape E05, le pilote est donc informé de l'état actif de la commande de ralenti inverseur. En outre, au cours de l'étape E08, le contrôleur 40 génère une consigne de déploiement des inverseurs de poussée 24 et 26 en position ouverte et adresse cette consigne aux unités 54 et 56. En résultat, les inverseurs de poussée 54 et 56 sont déployés en position ouverte sans que les manettes 28 et 30 soient déplacées.

Lorsque le système 86 est utilisé pour mettre en oeuvre le procédé des figures 7 et 8, au cours de l'étape E05, le contrôleur adresse le signal au moyen d'affichage 84 pour afficher le message « commande de ralenti inverseur active » et adresse la consigne de déploiement des inverseurs de poussée 24 et 26 en position ouverte aux unités 54 et 56.

Comme le système 36, le système 86 peut être utilisé pour mettre en oeuvre les procédés représentés sur les figures 5, 6, 7 et 8. Toutefois, alors que, dans le cas du système 36, le contrôleur 40 contrôle indirectement les unités 54 et 56 en pilotant les moteurs 58 et 60 pour modifier la position des manettes 28 et 30, dans le cas du système 86, le contrôleur 40 agit directement sur les unités 54 et 56.

## Revendications

1. Système de pilotage (36, 86) d'un moyen d'inversion de poussée (24, 26) d'un aéronef (18), comprenant un moyen de commande de ralenti inverseur (38), un premier moyen de détection (31) configuré pour détecter, lorsque la commande de ralenti inverseur est active, une condition d'activation du moyen d'inversion de poussée (24, 26), et un moyen d'actionnement (52) configuré pour activer le moyen d'inversion de poussée (24, 26) lorsque le premier moyen de détection (31) détecte une condition d'activation du moyen d'inversion de poussée (24, 26), **caractérisé en ce qu'**il comprend en outre un second moyen de détection (42, 44, 46, 48, 49) configuré pour détecter une condition d'activation de la commande de ralenti inverseur, le moyen de commande (38) étant configuré pour activer la commande de ralenti inverseur lorsque le second moyen de détection (42, 44, 46, 48, 49) détecte une condition d'activation de la commande de ralenti inverseur.

2. Système (36, 86) selon la revendication 1, comprenant en outre un module d'armement (50) apte à être activé par un utilisateur au cours d'une étape de préparation de l'atterrissage de l'aéronef (18) et/ou d'une étape de préparation du décollage de l'aéronef (18), le second moyen de détection (44, 48, 49) étant configuré pour détecter une condition d'activation de la commande de ralenti inverseur seulement si le module d'armement (50) est activé.

3. Système (18) selon la revendication 2, dans lequel le module d'armement (50) comprend un moyen d'armement (33) d'un système d'autofreinage (34) de l'aéronef (18), le module d'armement (50) étant configuré pour être activé lorsqu'un utilisateur actionne le moyen d'armement (33).

4. Système (36, 86) selon l'une quelconque des revendications 1 à 3, dans lequel le moyen de commande (38) comprend un contrôleur (40) et une manette de pilotage (28, 30) d'au moins un moteur (20, 22) de l'aéronef (18), la manette de pilotage (28, 30) étant capable d'activer une commande de ralenti inverseur.

5. Système (36) selon la revendication 4, comprenant un actionneur motorisé (58, 60) en communication d'informations avec le contrôleur (40), le contrôleur (40) étant apte à piloter l'actionneur motorisé (58, 60) de sorte à modifier une position de la manette de pilotage (28, 30) entre une position dans laquelle la manette de pilotage (28, 30) commande un fonctionnement en marche vers l'avant du moteur (20, 22) de l'aéronef (18) et une position (14) dans laquelle la manette (28, 30) de pilotage active une commande de ralenti inverseur.

6. Système (36, 86) selon la revendication 4 ou 5, comprenant en outre un moyen d'affichage (84) de la position de la manette de pilotage (28, 30).

7. Système (86) selon l'une quelconque des revendications 1 à 4, comprenant un moyen d'affichage (84) de l'activation de la commande de ralenti inverseur, le contrôleur (40) étant apte à activer directement la commande de ralenti inverseur.

8. Système (36, 86) selon l'une quelconque des revendications 1 à 7, dans lequel le second moyen de détection (42, 44, 46, 48, 49) est apte à détecter au moins un paramètre choisi parmi une vitesse de l'aéronef (18), une altitude de l'aéronef (18), un taux de variation de l'altitude de l'aéronef (18), un angle de descente de l'aéronef (18).

9. Système (36, 86) selon l'une quelconque des revendications 1 à 8, dans lequel une condition nécessaire pour que le second moyen de détection (42, 44, 46, 48, 49) détecte une condition d'activation de la commande de ralenti inverseur est qu'une commande de puissance moteur de l'aéronef (18) soit comprise entre 0% et 5% de la puissance maximale.

10. Procédé de pilotage d'un moyen d'inversion de poussée (24, 26) lié à au moins un moteur (20, 22) d'un aéronef (18), comprenant, dans cet ordre :
- la détection (E04) d'une condition d'activation d'une commande de ralenti inverseur,
- l'activation (E05) de la commande de ralenti inverseur,
- la détection (E06, E07) d'une condition d'activation du moyen d'inversion de poussée (24, 26), et
- l'activation (E08, E17) du moyen d'inversion de poussée (24, 26),
- la détection (E04) d'une condition d'activation d'une commande de ralenti inverseur étant de préférence la détection d'une situation de début d'arrondi avant atterrissage de l'aéronef ou la détection d'une situation de déclenchement d'une interruption de décollage.

## Patentansprüche

1. Steuersystem (36, 86) für eine Schubumkehreinrichtung (24, 26) eines Flugzeugs (18), umfassend eine Umkehr-Leerlaufsteuerungseinrichtung (38), eine erste Detektionseinrichtung (31), die dazu konfiguriert ist, eine Bedingung für die Aktivierung der Schubumkehreinrichtung (24, 26) zu detektieren, wenn die Umkehr-Leerlaufsteuerungseinrichtung aktiv ist, und eine Betätigungseinrichtung (52), die dazu konfiguriert ist, die Schubumkehreinrichtung (24, 26) zu aktivieren, wenn die erste Detektionseinrichtung (31) eine Bedingung für die Aktivierung der Schubumkehreinrichtung (24, 26) detektiert, **dadurch gekennzeichnet, dass** es ferner eine zweite Detektionseinrichtung (42, 44, 46, 48, 49) umfasst, die dazu konfiguriert ist, eine Bedingung für die Aktivierung der Umkehr-Leerlaufsteuerung zu detektieren, wobei die Steuerungseinrichtung (38) dazu konfiguriert ist, die Umkehr-Leerlaufsteuerung zu aktivieren, wenn die zweite Detektionseinrichtung (42, 44, 46, 48, 49) eine Bedingung für die Aktivierung der Umkehr-Leerlaufsteuerung detektiert.

2. System (36, 86) nach Anspruch 1, ferner umfassend ein Scharfschaltmodul (50), das dazu ausgelegt ist, von einem Benutzer während eines Schritts des Vorbereitens der Landung des Flugzeugs (18) und/oder eines Schritts des Vorbereitens des Starts des Flugzeugs (18) aktiviert zu werden, wobei die zweite Detektionseinrichtung (44, 48, 49) dazu konfiguriert ist, eine Bedingung für die Aktivierung der Umkehr-Leerlaufsteuerung nur dann zu detektieren, wenn das Scharfschaltmodul (50) aktiviert ist.

3. System (18) nach Anspruch 2, wobei das Scharfschaltmodul (50) eine Scharfschalteinrichtung (33) eines automatischen Bremssystems (34) des Flugzeugs (18) umfasst, wobei das Scharfschaltmodul (50) dazu konfiguriert ist, aktiviert zu werden, wenn ein Benutzer das Scharfschalteinrichtung (33) betätigt.

4. System (36, 86) nach einem der Ansprüche 1 bis 3, wobei die Steuerungseinrichtung (38) einen Controller (40) und einen Steuerhebel (28, 30) für mindestens ein Triebwerk (20, 22) des Flugzeugs (18) umfasst, wobei der Steuerhebel (28, 30) in der Lage ist, eine Umkehr-Leerlaufsteuerung zu aktivieren.

5. System (36) nach Anspruch 4, umfassend eine motorisierte Betätigungsvorrichtung (58, 60) in Informationskommunikation mit dem Controller (40), wobei der Controller (40) dazu ausgelegt ist, die motorisierte Betätigungsvorrichtung (58, 60) zu steuern, um eine Position des Steuerhebels (28, 30) zwischen einer Position, in der der Steuerhebel (28, 30) eine vorwärts gerichteten Betriebsfunktion des Triebwerks (20, 22) des Flugzeugs (18) steuert, und einer Position (14), in der der Steuerhebel (28, 30) eine Umkehr-Leerlaufsteuerung aktiviert, zu ändern.

6. System (36, 86) nach Anspruch 4 oder 5, ferner umfassend eine Anzeigeeinrichtung (84) der Position des Steuerhebels (28, 30).

7. System (86) nach einem der Ansprüche 1 bis 4, umfassend eine Anzeigeeinrichtung (84) der Aktivierung der Umkehr-Leerlaufsteuerung, wobei der Controller (40) dazu ausgelegt ist, die Umkehr-Leerlaufsteuerung direkt zu aktivieren.

8. System (36, 86) nach einem der Ansprüche 1 bis 7, wobei die zweite Detektionseinrichtung (42, 44, 46, 48, 49) dazu ausgelegt ist, mindestens einen Parameter zu detektieren, der aus einer Geschwindigkeit des Flugzeugs (18), einer Höhe des Flugzeugs (18), einer Änderungsrate der Höhe des Flugzeugs (18) und einem Sinkwinkel des Flugzeugs (18) ausgewählt ist.

9. System (36, 86) nach einem der Ansprüche 1 bis 8, wobei eine notwendige Bedingung für die zweite Detektionseinrichtung (42, 44, 46, 48, 49) zum Detektieren einer Bedingung für die Aktivierung der Umkehr-Leerlaufsteuerung darin besteht, dass eine Steuerung der Triebwerkleistung des Flugzeugs (18) zwischen 0 % und 5 % der maximalen Leistung liegt.

10. Verfahren zum Steuern einer Schubumkehreinrichtung (24, 26), die mit mindestens einem Triebwerk (20, 22) eines Flugzeugs (18) verbunden ist, umfassend in folgender Reihenfolge:
- Detektieren (E04) einer Bedingung für die Aktivierung einer Umkehr-Leerlaufsteuerung,
- Aktivieren (E05) der Umkehr-Leerlaufsteuerung,
- Detektieren (E06, E07) einer Bedingung für die Aktivierung der Schubumkehreinrichtung (24, 26), und
- Aktivieren (E08, E17) der Schubumkehreinrichtung (24, 26),
- wobei das Detektieren (E04) einer Bedingung für die Aktivierung einer Umkehr-Leerlaufsteuerung vorzugsweise das Detektieren einer Situation zu Beginn eines Ausbruchs vor der Landung des Flugzeugs oder das Detektieren einer Situation des Auslösens eines Startabbruchs ist.

## Claims

1. A system (36, 86) for controlling an aircraft (18) thrust reversal means (24, 26), comprising a reverse idle control means (38), a first detection means (31) configured to detect, when the reverse idle control is active, a condition for activation of the thrust reversal means (24, 26), and an actuation means (52) configured to activate the thrust reversal means (24, 26) when the first detection means (31) detects a condition for activation of the thrust reversal means (24, 26), **characterised in that** it further comprises a second detection means (42, 44, 46, 48, 49) configured to detect a condition for activation of the reverse idle control, the control means (38) being configured to activate the reverse idle control when the second detection means (42, 44, 46, 48, 49) detects a condition for activating the reverse idle control.

2. The system (36, 86) according to claim 1, further comprising an arming module (50) able to be activated by a user during a step of preparing the landing of the aircraft (18) and/or a step of preparing the take-off of the aircraft (18), the second detection means (44, 48, 49) being configured to detect a condition for activation of the reverse idle control only if the arming module (50) is activated.

3. The system (18) according to claim 2, wherein the arming module (50) comprises means (33) for arming an auto brake system (34) of the aircraft (18), the arming module (50) being configured to be activated when a user actuates the arming means (33).

4. The system (36, 86) according to any one of claims 1 to 3, wherein the control means (38) comprises a controller (40) and a control lever (28, 30) for at least one engine (20, 22) of the aircraft (18), the control lever (28, 30) being capable of activating a reverse idle control.

5. The system (36) according to claim 4, comprising a motorised actuator (58, 60) in communication of information with the controller (40), the controller (40) being able to control the motorised actuator (58, 60) so as to change a position of the control lever (28, 30) between a position wherein the control lever (28, 30) controls a forward operation of the engine (20, 22) of the aircraft (18) and a position (14) wherein the control lever (28, 30) activates a reverse idle control.

6. The system (36, 86) according to claim 4 or 5, further comprising a means (84) for displaying the position of the control lever (28, 30).

7. The system (86) according to any one of claims 1 to 4, comprising a means (84) for displaying the activation of the reverse idle control, the controller (40) being capable of directly activating the reverse idle control.

8. The system (36, 86) according to any one of claims 1 to 7, wherein the second detection means (42, 44, 46, 48, 49) is capable of detecting at least one parameter selected from a speed of the aircraft (18), an altitude of the aircraft (18), a rate of variation of the altitude of the aircraft (18), an angle of descent of the aircraft (18).

9. The system (36, 86) according to any one of claims 1 to 8, wherein a necessary condition for the second detection means (42, 44, 46, 48, 49) to detect a condition for activation of the reverse idle control is that an aircraft engine power control (18) is comprised between 0% and 5% of the maximum power.

10. A method for controlling a thrust reversal means (24, 26) connected to at least one engine (20, 22) of an aircraft (18), comprising, in this order:
- the detection (E04) of a condition for activation of a reverse idle control,
- the activation (E05) of the reverse idle control,
- the detection (E06, E07) of a condition for activation of the thrust reversal means (24, 26), and
- the activation (E08, E17) of the thrust reversal means (24, 26),
- the detection (E04) of a condition for activation of a reverse idle control preferably being the detection of a situation at the start of a flare before landing of the aircraft or the detection of a situation of triggering an aborted take-off.
